# EUROPEAN PATENT SPECIFICATION

(11) **EP 1 933 646 B1**
(45) Date of publication and mention of the grant of the patent: **23.12.2009**
(21) Application number: 06795747.2
(22) Date of filing: 23.08.2006
(51) Int. Cl.: A23L 3/34, A23B 4/16, A23B 4/14

(54) **A METHOD OF PROCESSING FISH**
VERFAHREN ZUR VERARBEITUNG VON FISCH
PROCEDE DE TRAITEMENT DU POISSON

(30) Priority: 23.08.2005 ZA 200506754
(43) Date of publication of application: 25.06.2008
(73) Proprietor: Quali Guarantee (Proprietary) Limited, Table Bay Harbour Cape Town (ZA)
(72) Inventor: Burke, William, Roland, 7395 Saldanha (ZA)
(74) Representative: Petraz, Gilberto Luigi
(86) International application number: PCT/IB2006/052920
(87) International publication number: WO 2007/023462

(56) References cited:
- EP-A- 1 444 899
- US-A- 4 864 923
- US-A1- 2002 127 313

## Description

THIS INVENTION relates to a method of processing fish.

The Applicant is aware of EP 1444899 which describes a process for treating fish in which a gas and/or smoke and/or a liquid that evaporates is injected into the fish, using needles. EP 1444899 suggests using a slight negative pressure inside a hood to prevent escapement of treatment gas prior to the treatment gas being treated to make it suitable for release to the atmosphere. The Applicant is also aware of US 4,864,923 which teaches a method and apparatus for cooling pieces of meat by injecting a cooled gaseous medium into the meat. A partial vacuum is drawn in a chamber of a brine injection machine of the type having a bed of needles which is located in the chamber which is mounted for rotation so as to tumble pieces of meat into engagement with needles such that the needles are caused to be embedded in the meat. The Applicant is further aware of US 2002/0127313 which discloses smoke treatment of fish using smoke injection needles to inject bubbles of smoke into the fish.

It is known to process fish in order to extend the shelf life thereof and to enhance the appearance and other properties and qualities thereof. One particular process used for the above purpose includes exposing the fish to be treated to a pressurized treatment gas, typically a gas that at least includes carbon monoxide. The process is carried out in a treatment chamber in which the fish to be treated is contained, the treatment gas displaced into the chamber being maintained at a pressure typically between 6 bar and 10 bar for 10 hours, or even longer, during which the gas penetrates the fish and thereby enhances various properties and qualities of the fish.

The above process clearly is a slow process and requires the treatment gas used to be maintained at a high pressure. It has been proposed in this regard to expose the fish to be treated to a negative pressure prior to pressurizing the chamber with the treatment gas, the negative pressure causing the cells of the fish, to be penetrated by the treatment gas, to open up and even rupture, thus being more receptive to being penetrated by the treatment gas. However, the opening up of the cells is effectively reversed when the chamber is pressurized and the benefit of exposing the fish first to a negative pressure therefore has not proven to be of major benefit, in terms of reducing treatment times.

It is thus an object of this invention to provide an improved method of processing fish through penetration of the fish with a treatment gas, particularly by reducing treatment times and enhancing effective penetration of fish with a treatment gas.

Reference is made hereinafter particularly to the treatment of fish bodies, a fish body comprising the body of fish to be treated, whether it be an entire fish, or a fish loin or a fish steak obtained from "cutting up" a fish.

According to the invention there is provided a method of processing fish, which includes the steps of:
inserting hollow needles into fish bodies to be treated, the fish bodies being supported in a treatment chamber and each needle inserted into a fish body defining a passage having a discharge opening placed inside the fish body, the passage in said needle being connected in communication with a treatment gas supply;
feeding a treatment gas into the fish bodies via the needles inserted in the fish bodies, and
maintaining a negative pressure in the treatment chamber for inducing the treatment gas fed into the fish bodies to be drawn through the fish bodies and thereby expose the fish bodies to the treatment gas for the processing thereof.

The method may include introducing the fish bodies into the treatment chamber. The inserting of at least one needle into each fish body and providing for the passage in each needle to be connected in flow communication with a treatment gas supply, can be carried out in many different modes, being determined particularly by the apparatus utilized for the purpose. Often, more than one needle is inserted into a fish body.

The fish bodies may be supported in the treatment chamber on apparatus having a multi-layer tray structure that includes a passage arrangement connected or connectable to a treatment gas supply, the passage arrangement including multiple feed passage segments connected or connectable to needles inserted into fish bodies. The multiple feed passage segments particularly may be defined by flexible tubular elements or conduits being provided with suitable coupling formations for coupling free ends thereof to needles.

The fish bodies to be treated are typically elongate. The needles may be inserted into the fish bodies to extend longitudinally through the fish bodies, with the discharge openings being in locations where treatment gas will be discharged into substantially central regions of the fish bodies being treated. By way of development, the needles may be inserted transversely into fish bodies to be treated.

The discharge opening defined by a needle may be located within a recess formed in a wall of the needle, the recess configuration ensuring that the discharge opening will not be blocked by the flesh of fish upon insertion of the needle into a fish body. It is envisaged that the needle may define two or more discharge openings, which will all be suitably located for discharging treatment gas substantially centrally within a fish body.

Treatment gas so introduced into a fish body will tend to flow along the needles from a discharge opening in opposite directions with respect to the discharge opening and hence be drawn through the fish body along the entire length thereof.

The treatment gas being fed into fish bodies may be under a positive pressure of up to 0,4 bar, typically between 0.1 and 0.2 bar. The negative pressure within the treatment chamber may be maintained between 0,1 and 2 bar, typically between 0.5 and 1 bar.

The fish bodies may be treated in the treatment chamber for between 0.5 hours and 4 hours, typically between 1 and 3 hours, e.g. about 2 hours, whilst the treatment chamber is under negative pressure.

The method may include pressurising the treatment chamber, after an initial treatment period at negative pressure, with the treatment gas to a positive pressure of between 0.1 and 4 bar, typically between 1 and 2 bar, to subject the fish bodies to a subsequent treatment period.

The subsequent treatment period may be between 1 hour and 8 hours, typically between 2 and 6 hours, e.g. between 4 and 6 hours.

The temperature within the treatment chamber may be maintained between 0°C and 3°C during fish treatment. Particularly where fish to be treated is provided in a frozen form, the method may provide for defrosting of the fish before gas treatment.

Prior to introducing fish bodies into the treatment chamber, the method of the invention may provide for cleaning and washing of the fish and optionally cutting of the fish into loins or steaks.

The treatment gas used in the method of the invention typically includes carbon monoxide. The treatment gas used thus typically includes carbon monoxide as a major constituent. It is envisaged also that the treatment gas may include a mixture of carbon monoxide and one of nitrogen and carbon dioxide. Typically, the treatment gas includes between 60% and 80% carbon monoxide, between 10% and 30% nitrogen and between 5% and 15% carbon dioxide, on a volume basis.

The method may include recycling the treatment gas displaced through the treatment chamber, during at least a portion of the time that a negative pressure is maintained within the treatment chamber.

The method of processing fish, in accordance with the invention, also may be associated with various other treatment steps and processes that are commonly applied in relation to fish, particularly in relation to the extension of the shelf life of the fish, the quality of the fish, the taste of the fish, and/or the like.

The invention extends to fish treatment apparatus which includes
a treatment chamber within which fish bodies can be supported;
a treatment gas supply to feed treatment gas to fish bodies to be treated in the treatment chamber; and
a vacuum generator to generate a negative pressure inside the treatment chamber, the treatment gas supply and the vacuum generator being operable simultaneously to feed treatment gas to fish bodies to be treated whilst a negative pressure is being maintained in the treatment chamber.

The treatment chamber may be sealable in a substantially gas tight manner. The treatment chamber may include a multi-layer support structure inside the treatment chamber on which fish bodies are supportable.

The apparatus may include a recycle gas line to recycle gas from inside the treatment chamber to the treatment chamber, via a gas pump.

The apparatus may include a fish needle connected to the treatment gas supply. The fish needle may have at least one discharge opening located within a recess formed in a wall of the needle.

The invention further extends to a hollow fish needle having an elongate body with a sidewall and at least one discharge opening, the at least one discharge opening being located in a recess formed within the sidewall.

The discharge opening may be spaced at least 15 % of the length of the needle, from a nearest end of the needle to said discharge opening. Preferably, the discharge opening is spaced at least 25 % of the length of the needle, from a nearest end of the needle to said discharge opening.

The fish needle may include at least two, e.g. between ten and twenty, of said discharge openings, the discharge openings being longitudinally spaced. Some of the discharge openings may also be circumferentially spaced.

The method of processing fish and fish treatment apparatus, in accordance with the invention, are described hereafter, by way of example, with reference to the accompanying diagrammatic drawings. In the drawings:
Figure 1 illustrates schematically in cross-sectional view a part of apparatus for carrying out the method of processing fish, in accordance with the invention;
Figure 2 illustrates in three dimensions the configuration of a fish body during the fish treatment process, as carried out in the apparatus of Figure 1; and
Figure 3 illustrates schematically in side view the configuration of the needle that is inserted into the fish body, as shown in Figure 2.

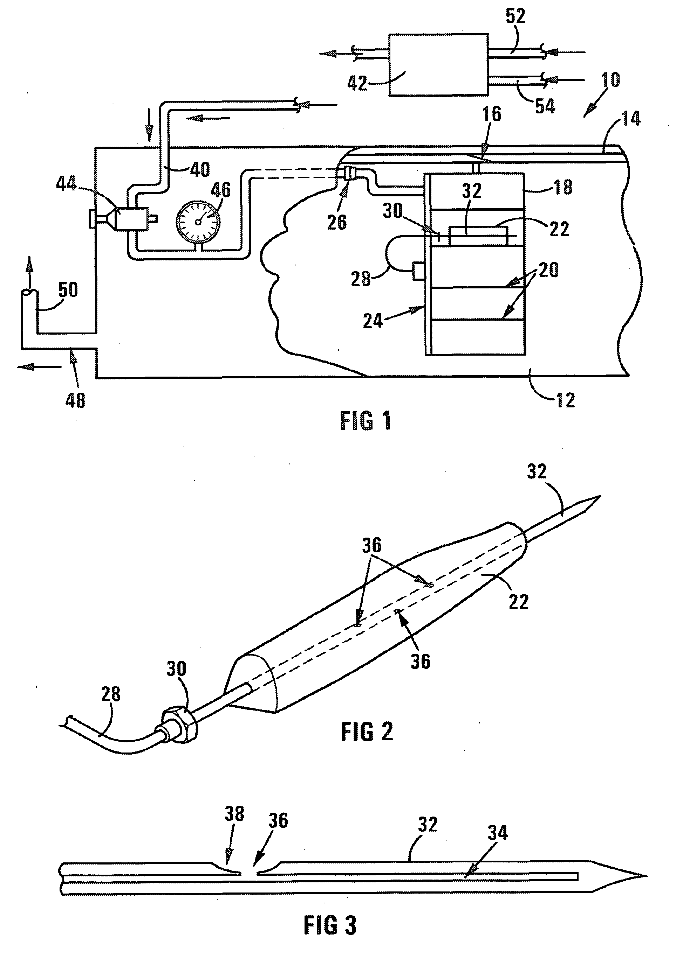

Referring to the drawings, Figure 1 illustrates a part of apparatus for processing fish, in accordance with the method of the invention, the part of the apparatus being designated generally by the reference numeral 10. The apparatus 10 includes a treatment chamber 12, which is only partially shown, the end of the chamber 12 not shown defining an entrance opening that can be sealingly closed by a hatch-type door (not shown).

By opening the hatch-type door access is provided to a support rail 14 that can be engaged by a complementary rail engagement formation 16 that is secured to and that extends from a multi-layer tray structure 18, such a tray structure 18 thus being effectively suspended from the rail 14. It will be understood in this regard that a plurality of tray structures 18 can be suspended from the rail 14 within the chamber 12, the number of tray structures that can be so suspended being determined by the effective length of the chamber 12.

The tray structure 18 as shown includes a plurality of support platforms or shelves 20 on each of which a plurality of fish bodies 22 (only one shown) can be supported, for the purpose of being exposed to the method of processing fish, in accordance with the invention.

The tray structure 18 defines a passage arrangement 24 that is operatively connected, typically by a quick release coupling 26, to a treatment gas supply, which is described in more detail hereafter. The passage arrangement 24 includes a plurality of flexible tubes 28 that communicate with the treatment gas supply and that effectively extend from the tray structure 18, the free end of each flexible tube 28 being connectable to, again typically by a quick release coupling 30, a needle 32 that is inserted into a fish body 22.

As is shown clearly in Figures 2 and 3 of the drawings, the needle 32 defines a passage 34 therein along the length thereof, the passage 34 operatively communicating with a flexible tube 28 when the tube 28 is connected to the needle 32 by a quick release coupling 30, as described above. The needle 32 has three discharge openings 36 defined therein at a location where, with a fish body 22 having the needle 32 inserted therein as shown, the discharge openings 36 are substantially centrally located within the fish body 22. Each discharge opening 36 is formed within a recess formation 38 that is defined within the wall of the needle 32, this configuration of recess formation 38 and discharge opening 36 being such that when the needle is inserted through a fish body, the discharge opening 36 will not be blocked by the flesh of fish scraped from the fish body.

Figure 1 clearly illustrates only a single fish body 22 and a single tray structure 18, and it must be understood in this regard that during fish processing, all the platforms 20 of a plurality of tray structures 18 will have a plurality of fish bodies supported thereon, with each fish body having a needle inserted therethrough that is connected via a flexible tube to a gas supply.

The gas supply, which is a treatment gas supply, includes a supply line that permits connection to a plurality of tray structures (not shown), all the passage arrangements of the tray structures being supplied from a supply line 40 that leads into the chamber 12 and which is operatively connected to a treatment gas accumulator 42, from which treatment gas is displaced into the chamber 12. The supply line 40 has a control valve 44 located in line therewith, as well as a pressure gauge 46, the valve 44 permitting the pressure of treatment gas supplied to be effectively controlled, preferably to be maintained at a level below 0,2 bars.

The treatment chamber 12 also has an exit passage 48 leading therefrom, the exit passage being defined by a pipeline 50 that leads to a vacuum pump, or the like, whereby a negative pressure can be induced within the chamber 12, as is described in more detail hereafter. It will be understood in the above regard that as a result of the negative pressure induced within the treatment chamber 12, gas in the chamber will be displaced therefrom, it being envisaged that treatment gas so displaced will be returned to the accumulator 42 via a first inlet 52, particularly after having passed through suitable filters (not shown), for filtering the treatment gas. The accumulator also has a second inlet 54 that provides for "fresh" treatment gas to be charged into the accumulator, the accumulator clearly being associated with a suitable gas displacement means, e.g. a pump, or the like, which provides for the displacement of treatment gas from the accumulator into the chamber 12.

In accordance with the method of processing fish, in accordance with the invention, the fish bodies to be treated will be placed on the platforms of tray structures 18 suspended within the treatment chamber 12 as shown, each fish body 22 having a needle 32 inserted therein in the configuration illustrated clearly in Figure 2 of the drawings. With the hatch door of the chamber closed, by feeding treatment gas into the chamber 12, the treatment gas will be fed to the respective passage arrangements of the tray structures. From the passage arrangements the treatment gas will be displaced along the needles 32 inserted through the fish bodies 22 and then be discharged into the fish bodies 22 via the discharge openings 36 defined within the walls of the needles 32. It is envisaged in this regard that the fish treatment process will provide for treatment gas to be displaced into the chamber under a pressure in the order of 0,2 bar, while at the same time a negative pressure in the order between 0,5 and 1 bar will be created and maintained within the chamber 12, by the operation of the vacuum pump, as described above.

It has been found that at least a portion of the treatment gas fed into a fish body will move in opposite directions along the needle 32 inserted therein towards the opposite ends of the fish body, the negative pressure within the chamber hence drawing the treatment gas through the fish body along the entire length thereof. By such treatment gas penetration, substantially the entire fish body will be exposed to gas in order to achieve the processing objectives.

It is envisaged that the treatment gas may be pure carbon monoxide, or a mixture of carbon monoxide, nitrogen and carbon dioxide. By continuously feeding the treatment gas into the fish bodies and drawing the treatment gas through the fish bodies for a duration in the order of 2 hours, it is believed that the fish bodies will be effectively penetrated by the treatment gas and thus be exposed to required processing.

It will be understood that the treatment gas will be effectively circulated through the chamber for the duration of the process, although it is envisaged also that the treatment gas penetration process can be completed, following the two hour time duration referred to, by inducing a positive pressure between 0,5 and 1 bar within the treatment chamber, which will result in treatment gas further penetrating the fish bodies, now from the outside thereof. This optional process step typically occurs over a time duration in the order of 5 hours. Upon completion of the above it is believed that the fish bodies will have been effectively penetrated by treatment gas and thereby be effectively processed in terms of the processing objectives which, generally, will be to extend the shelf life of the treated fish, improve the appearance of the fish, and improve various other characteristics and properties of the fish. Different objectives clearly can be achieved by utilizing different treatment gases.

By simultaneously feeding treatment gas into a fish body and maintaining the fish body in a negative pressure environment, it is believed that the negative pressure environment will effectively open or even rupture the cells of the fish, thus facilitating effective penetration of the fish with the treatment gas and hence effective processing. It has been found that this fish penetration will occur over a significantly shorter period of time when compared with known treatment gas penetration processes, thus rendering the method of processing fish, in accordance with the invention, significantly more time efficient and effective in relation to the treatment of the fish.

It will be appreciated that the treatment gas will be under a relatively low pressure throughout the process, when compared with known processes, rendering the process relatively safe, particularly insofar as the treatment gas may contain carbon monoxide.

The invention clearly extends also to apparatus for use in the method of processing fish, in accordance with the invention, which include the general features of the apparatus above described and all variations thereof. Still further, the invention extends to fish body support trays and needles for use in the process, and as described above.

The method of processing fish, in accordance with the invention, may include various other process steps also, particularly steps that can be combined with the steps of the method of the invention and that are already known in relation to the processing of fish.

## Claims

1. A method of processing fish, which includes the steps of:
inserting hollow needles into fish bodies to be treated, the fish bodies being supported in a treatment chamber and each needle inserted into a fish body defining a passage having a discharge opening placed inside the fish body, the passage in said needle being in flow communication with a treatment gas supply;
feeding a treatment gas into the fish bodies via the needles inserted in the fish bodies, and
maintaining a negative pressure between 0.1 and 2 bar in the treatment chamber for inducing the treatment gas fed into the fish bodies to be drawn through the fish bodies and thereby expose the fish bodies to the treatment gas for the processing thereof.

2. The method as claimed in claim 1, which includes recycling the treatment gas displaced through the treatment chamber, during at least a portion of the time that a negative pressure is maintained within the treatment chamber.

3. The method as claimed in claim 1 or claim 2, in which the discharge opening defined by a needle is located within a recess formed in a wall of the needle, the recess configuration ensuring that the discharge opening will not be blocked by the flesh of fish upon insertion of the needle into a fish body.

4. The method as claimed in any of the preceding claims, in which the treatment gas being fed into fish bodies is under a positive pressure of up to 0.4 bar.

5. The method as claimed in any one of the preceding claims, in which the fish bodies are treated in the treatment chamber for between 0.5 hours and 4 hours, whilst the treatment chamber is under negative pressure.

6. The method as claimed in any one of the preceding claims, which includes pressurising the treatment chamber, after an initial treatment period at negative pressure, with the treatment gas to a pressure of between 0,1 and 4 bar, to subject the fish bodies to a subsequent treatment period.

7. The method as claimed in claim 6, in which the subsequent treatment period is between 1 hour and 8 hours.

8. The method as claimed in any one of the preceding claims, in which the temperature within the treatment chamber is maintained between 0°C and 3°C during fish treatment.

9. The method as claimed in any one of the preceding claims, in which the treatment gas used includes carbon monoxide as a major constituent.

10. Fish treatment apparatus which includes
a treatment chamber within which fish bodies can be supported;
a treatment gas supply to feed treatment gas to fish bodies to be treated in the treatment chamber; and
a vacuum generator to generate a negative pressure of between 0.1 and 2 bar inside the treatment chamber, the treatment gas supply and the vacuum generator being operable simultaneously to feed treatment gas to fish bodies to be treated whilst said negative pressure is being maintained in the treatment chamber.

11. The apparatus as claimed in claim 10, which includes a recycle gas line to recycle gas from inside the treatment chamber to the treatment chamber, via a gas pump.

12. The apparatus as claimed in claim 10 or claim 11, which includes a fish needle connected to the treatment gas supply, the fish needle having at least one discharge opening located within a recess formed in a wall of the needle.

13. The apparatus as claimed in any of claims 10 to 12 inclusive, in which the treatment chamber is sealable in a substantially gas tight manner, and which includes a multi-layer support structure inside the treatment chamber on which fish bodies are supportable.

14. A hollow fish needle having an elongate body with a sidewall and at least one discharge opening, the at least one discharge opening being located in a recess formed within the sidewall.

15. The fish needle as claimed in claim 14, in which the discharge opening is spaced at least 15 % of the length of the needle, from a nearest end of the needle to said discharge opening.

16. The fish needle as claimed in claim 15, in which the discharge opening is spaced at least 25 % of the length of the needle, from a nearest end of the needle to said discharge opening.

17. The fish needle as claimed in any of claims 14 to 16 inclusive, which includes at least two of said discharge openings, the discharge openings being longitudinally spaced.

## Patentansprüche

1. Verfahren zur Verarbeitung von Fisch, beinhaltend die Schritte:
- Einführen von Hohlnadeln in die zu behandelnden Fischkörper, wobei die Fischkörper in einer Behandlungskammer aufbewahrt bzw. gehalten werden und jede der in den Fischkörper eingeführten Nadeln einen Durchtritt mit einer im Fischkörper positionierten Austrittsöffnung aufweist, wobei der Durchtritt der Nadel in Fließverbindung mit einer Behandlungsgaszufuhr steht;
- Zuführen von Behandlungsgas in die Fischkörper mittels der in die Fischkörper eingeführten Nadeln, und
- Halten bzw. Aufrechterhalten eines negativen Drucks zwischen 0,1 und 2 bar in der Behandlungskammer zum Induzieren von Behandlungsgas, welches den Fischkörpern zugeführt wurde, um durch die Fischkörper hindurchgezogen bzw. hindurchgeführt zu werden und **dadurch** die Fischkörper zur deren Verarbeitung dem Behandlungsgas auszusetzen.

2. Verfahren nach Anspruch 1, welches ein Recyceln von Behandlungsgas beinhaltet, welches in der Behandlungskammer, während zumindest eines Zeitraumes, in welchem ein negativer Druck in der Behandlungskammer gehalten bzw. aufrechterhalten wurde, durchgesetzt wurde.

3. Verfahren nach Anspruch 1 oder 2, bei welchem die durch die Nadel definierte Austrittsöffnung in einer Ausnehmung angeordnet ist, welche an einer Wandung der Nadel ausgebildet ist, wobei die Gestaltung der Ausnehmung sicherstellt, daß die Austrittsöffnung beim Einführen der Nadel in den Fischkörper nicht durch Fischfleisch blockiert bzw. verstopft wird.

4. Verfahren nach einem der vorangegangenen Ansprüche, wobei das Behandlungsgas den Fischkörpern unter einem positiven Druck von bis zu 0,4 bar zugeführt wird.

5. Verfahren nach einem der vorangegangenen Ansprüche, wobei die Fischkörper in der Behandlungskammer zwischen 0,5 und 4 Stunden behandelt werden, während die Behandlungskammer einen negativen Druck aufweist.

6. Verfahren nach einem der vorangegangenen Ansprüche, welches eine Druckbeaufschlagung der Behandlungskammer beinhaltet, wobei nach einem Anfangsbehandlungzeitraum bei einem negativen Druck, bei dem das Behandlungsgas einen Druck zwischen 0,1 und 4 bar aufweist, die Fischkörper einem darauffolgenden bzw. anschließenden Behandlungszeitraum unterworfen werden.

7. Verfahren nach Anspruch 6, wobei der darauffolgende bzw. anschließende Behandlungszeitraum zwischen einer und acht Stunden dauert.

8. Verfahren nach einem der vorangegangenen Ansprüche, wobei die Temperatur innerhalb der Behandlungskammer während der Fischbehandlung zwischen 0°C und 3°C gehalten bzw. aufrechtgehalten wird.

9. Verfahren nach einem der vorangegangenen Ansprüche, wobei das verwendete Behandlungsgas als Hauptinhaltsstoff bzw. Hauptbestandteil Kohlenmonoxid beinhaltet.

10. Fischbehandlungvorrichtung, beinhaltend:
- eine Behandlungskammer, in welcher Fischkörper aufbewahrt bzw. gelagert werden können;
- eine Behandlungsgaszufuhr zum Zuführen von Behandlungsgas zu Fischkörpern, welche in der Behandlungskammer zu behandeln sind; und
- einen Vakuumgenerator zum Generieren eines negativen Drucks zwischen 0,1 und 2 bar innerhalb der Behandlungskammer, wobei die Behandlungsgaszufuhr und der Vakuumgenerator gleichzeitig betreibar sind, um Behandlungsgas den zu behandelnden Fischkörpern zuzuführen, während der negative Druck in der Behandlungskammer gehalten bzw. aufrechtgehalten wird.

11. Vorrichtung nach Anspruch 10, beinhaltend eine Recycling- bzw. Wiederaufbereitungsgasleitung, um Gas von bzw. aus der Behandlungskammer zu bzw. in die Behandlungskammer zu recyceln bzw. rückzuführen, und zwar mittels einer Gaspumpe.

12. Vorrichtung nach einem der Ansprüche 10 oder 11, beinhaltend eine Fischnadel verbunden mit einer Behandlungsgaszufuhr, wobei die Fischnadel zumindest eine Austrittsöffnung aufweist, welche in einer Ausnehmung positioniert bzw. angeordnet ist, welche in einer Wandung der Nadel ausgebildet ist.

13. Vorrichtung nach einem der Ansprüche 10 bis einschließlich 12, wobei die Behandlungskammer in einer im wesentlichen gasdichten Weise versiegelbar bzw. abgedichtbar ist und eine mehrlagige bzw. mehrschichtige Halte- bzw. Tragestruktur innerhalb der Behandlungskammer umfaßt, auf welcher die Fischkörper aufbewahrbar bzw. lagerbar sind.

14. Hohle Fischnadel mit einen langgestreckten bzw. länglichen Körper mit einer Seitenwand und zumindest einer Austrittsöffnung, wobei die zumindest eine Austrittsöffnung in einer Ausnehmung angeordnet ist, welche in der Seitenwand ausgebildet ist.

15. Fischnadel nach Anspruch 14, wobei die Austrittsöffnung von dem nächstgelegenen Nadelende bis zur Austrittsöffnung zumindest 15% der Nadellänge entfernt bzw. beabstandet ist.

16. Fischnadel für nach Anspruch 15, wobei die Austrittsöffnung vom nächstgelegenen Nadelende bis zur Austrittsöffnung zumindest 25% der Nadellänge entfernt bzw. beabstandet ist.

17. Fischnadel nach einem der Ansprüche 14 bis einschließlich 16, beinhaltend zumindest zwei Austrittsöffnungen, wobei die Austrittsöffnungen längs verlaufen bzw. längswärts beabstandet sind.

## Revendications

1. Procédé de traitement de poissons, qui comprend les étapes consistant à :
■ insérer des aiguilles creuses dans les corps des poissons à traiter, les corps des poissons étant supportés dans une chambre de traitement et chaque aiguille insérée dans un corps de poisson définissant un passage comportant une ouverture de décharge placée à l'intérieur du corps du poisson, le passage dans ladite aiguille étant en communication fluidique avec une alimentation en gaz de traitement ;
■ délivrer un gaz de traitement dans les corps des poissons par l'intermédiaire des aiguilles insérées dans les corps des poissons ; et
■ maintenir une pression négative entre 0,1 et 2 bars dans la chambre de traitement pour induire l'aspiration du gaz de traitement délivré dans les corps des poissons à travers les corps des poissons et, de ce fait, exposer les corps des poissons au gaz de traitement pour leur traitement.

2. Procédé selon la revendication 1, qui comprend le recyclage du gaz de traitement déplacé à travers la chambre de traitement, pendant au moins une partie du temps pendant lequel une pression négative est maintenue dans la chambre de traitement.

3. Procédé selon la revendication 1 ou la revendication 2, dans lequel l'ouverture de décharge définie par une aiguille est située dans un évidement formé dans une paroi de l'aiguille, la configuration de l'évidement garantissant que l'ouverture de décharge ne sera pas bloquée par la chair du poisson lors de l'insertion de l'aiguille dans un corps de poisson.

4. Procédé selon l'une quelconque des revendications précédentes, dans lequel le gaz de traitement délivré dans les corps des poissons est à une pression positive allant jusqu'à 0,4 bar.

5. Procédé selon l'une quelconque des revendications précédentes, dans lequel les corps des poissons sont traités dans la chambre de traitement pendant entre 0,5 heure et 4 heures, tandis que la chambre de traitement est à une pression négative.

6. Procédé selon l'une quelconque des revendications précédentes, qui comprend la pressurisation de la chambre de traitement, après une période de traitement initiale à une pression négative, avec le gaz de traitement à une pression entre 0,1 et 4 bars, pour soumettre les corps des poissons à une période de traitement suivante.

7. Procédé selon la revendication 6, dans lequel la période de traitement suivante se situe entre 1 heure et 8 heures.

8. Procédé selon l'une quelconque des revendications précédentes, dans lequel la température dans la chambre de traitement est maintenue entre 0°C et 3°C pendant le traitement des poissons.

9. Procédé selon l'une quelconque des revendications précédentes, dans lequel le gaz de traitement utilisé comprend du monoxyde de carbone en tant que constituant principal.

10. Appareil de traitement de poissons qui comprend :
■ une chambre de traitement dans laquelle des corps de poissons peuvent être supportés ;
■ une alimentation en gaz de traitement pour délivrer du gaz de traitement aux corps des poissons à traiter dans la chambre de traitement ; et
■ un générateur de vide pour générer une pression négative comprise entre 0,1 et 2 bars à l'intérieur de la chambre de traitement, l'alimentation en gaz de traitement et le générateur de vide pouvant être utilisés simultanément pour délivrer du gaz de traitement aux corps des poissons à traiter tandis que ladite pression négative est maintenue dans la chambre de traitement.

11. Appareil selon la revendication 10, qui comprend une conduite de gaz de recyclage pour recycler le gaz de l'intérieur de la chambre de traitement vers la chambre de traitement, par l'intermédiaire d'une pompe à gaz.

12. Appareil selon la revendication 10 ou la revendication 11, qui comprend une aiguille pour poisson reliée à l'alimentation en gaz de traitement, l'aiguille pour poisson comportant au moins une ouverture de décharge située dans un évidement formé dans une paroi de l'aiguille.

13. Appareil selon l'une quelconque des revendications 10 à 12, dans lequel la chambre de traitement peut être rendue étanche d'une manière sensiblement étanche aux gaz, et qui comprend une structure de support multicouche à l'intérieur de la chambre de traitement sur laquelle les corps des poissons peuvent être supportés.

14. Aiguille creuse pour poisson comportant un corps allongé avec une paroi latérale et au moins une ouverture de décharge, ladite au moins une ouverture de décharge étant située dans un évidement formé dans la paroi latérale.

15. Aiguille pour poisson selon la revendication 14, dans laquelle l'ouverture de décharge est espacée, sur au moins 15 % de la longueur de l'aiguille, d'une extrémité la plus proche de l'aiguille jusqu'à ladite ouverture de décharge.

16. Aiguille pour poisson selon la revendication 15, dans laquelle l'ouverture de décharge est espacée, sur au moins 25 % de la longueur de l'aiguille, d'une extrémité la plus proche de l'aiguille jusqu'à ladite ouverture de décharge.

17. Aiguille pour poisson selon l'une quelconque des revendications 14 à 16 incluses, qui comprend au moins deux desdites ouvertures de décharge, les ouvertures de décharge étant espacées longitudinalement.
